# EUROPEAN PATENT SPECIFICATION

(11) **EP 2 311 688 B1**
(45) Date of publication and mention of the grant of the patent: **24.04.2013**
(21) Application number: 09460046.7
(22) Date of filing: 19.10.2009
(51) Int. Cl.: B60R 11/02

(54) **A rotatable holder for a mobile phone or other electronic device with a screen**
Drehbarer Halter für ein Mobiltelefon oder eine andere elektronische Vorrichtung mit Bildschirm
Support rotatif pour téléphone mobile ou autre dispositif électronique doté d'un écran

(43) Date of publication of application: 20.04.2011
(73) Proprietor: BURY Sp. z o.o., 39-300 Mielec (PL)
(72) Inventor: Grabarz, Marian, 39-300 Mielec (PL)
(74) Representative: Kaminski, Zbigniew

(56) References cited:
- WO-A-2007/111516
- GB-A- 2 343 918
- GB-A- 2 384 610
- US-B1- 6 343 006

## Description

This invention relates to a rotatable holder for a mobile phone or other electronic device with a screen, especially for a mechanical vehicle, provided with a connector, which is used to connect it mechanically and electrically with a hanger fixed permanently within the mechanical vehicle.

The rotatable holder consists of a holding unit locking the mobile phone in the holder, a connector, which is adapted to connect the holding unit with a hanger mounted within a vehicle to a vehicle body, and a mechanism, by means of which the holding unit is rotatably connected with the connector. The mechanism is adapted to enable a rotation of the holding unit with the mobile phone or other electronic device inserted into it from a vertical into a horizontal position and vice versa, as well as to enable locking the holding unit in a set position.

Modern electronic devices, for example these used in cars, are provided with screens. For the convenience of the user a possibility to turn the electronic device 90 degrees is advisable.

US patent No. US 4 776 553 discloses a mobile phone holder for a mechanical vehicle, which is also a hanger fixed to a body of a car and which enables positioning the mobile phone at a small angle from the horizontal plane or, after changing the position of hanger screws, inclining it at a small angle from the vertical plane.

US patent No. US 6 315 255 B1 discloses a holder for a mobile phone, which is connected to a hanger by means of a connection provided with a slot, into which a holding unit is inserted. The connection is connected, by means of a snap joint, with the hanger that is mounted within a vehicle and enables an inclined position of the mobile phone by turning it around an axis parallel to a mobile phone's symmetry plane.

None of the holders mentioned above is suitable to rotate a mobile phone around an axis perpendicular to the phone's symmetry plane in order to set up the horizontal and vertical position of a phone screen.

British patent application No. GB 9 008 455 discloses a mobile phone holder connected, by means of a ball-and-socket joint, to a hanger mounted within a vehicle. The ball-and-socket joint is adapted to enable rotation of the mobile phone around an axis perpendicular to a phone's symmetry plane, which means that both the horizontal and vertical positions of the phone screen can be set up, however, it is necessary to fix the holder in an established position to the hanger by means of a screw.

European patent application No. EP 1 393 980 A2 (closest prior art) discloses a mobile phone holder connected to a hanger by means of a ball-and-socket joint. The hanger is composed of two parts: a bracket with a spherical external surface, which is adapted to interlock with a spherical cap in the holder, and an internal spherical surface, which is adapted to interlock with a ball-shaped insert located within the bracket. Thanks to this arrangement it is possible not only to rotate the mobile phone around an axis perpendicular to a phone's symmetry plane but also to incline the phone slightly in the vertical plane. A major inconvenience of this solution is that the holder is connected to the hanger by means of a screw, which requires an additional tool to set the holder up in a convenient position.

PCT patent application No. WO 2007 / 111516 A1 teaches a modular mounting bracket assembly for portable electronic devices, such as mobile phones, to be used within a vehicle. The bracket assembly consists of a body having a base with a suction cup, a stem extending from the base, a ball joint at a distal end of the stem, a cradle connected to the ball joint, and an interface plate attached to the cradle for holding the electronic device.

This mounting bracket assembly is not adapted to rotate the portable electronic device between horizontal and vertical orientations.

British patent application No. GB 2343918 A refers to a hinge for a foldable portable telephone. The hinge is composed of cylinders integrally formed at the foldable portions of the telephone, and a pair of shafts inserted at both ends of the hinge. Each shaft consists of a disk with a small-diameter cylinder having two holes, an elastic cylinder secured inside a bore of the small diameter cylinder, and a large-diameter cylinder with a bore inside which the small-diameter cylinder with the elastic cylinder is fitted. The bore of the large-diameter cylinder has on its inner surface two recesses which correspond to two holes of the small-diameter cylinder. Inside the holes of the small-diameter cylinder two balls are freely fitted, which are surrounded by a side wall of the elastic cylinder and the recesses of the large-diameter cylinder.

This solution enables parts of the portable telephone to be rotated in one direction only, but does not allow to switch one foldable part against another between horizontal and vertical orientations.

British patent application No. GB 2384610 A and US patent No. US 6343006 B1 disclose a mounting equipment for display screens or other devices, such as camera, which comprises a support, a support arm extending from the support, and at least one rotatable holder connected to the support arm and holding the screen or other device. The holder comprises a boll joint that consists of a ball and socket. The ball is a frictional fit within the socket and a twisting moment is required to rotate the ball. One end of the ball joint is adapted for mounting the screen, while another end thereof is adapted to be connected with the support arm (snap connection), both to control angular position of the screen in different planes. The ball is mounted on a neck extending from a junction block with a plurality of guide members which fits into a recess in the support arm by means of a release assembly. The junction block allows the ball joint to be rotated and blocked within the support arm between a portrait and landscape orientations. The release assembly according to GB 2384610 A may comprise, for example, a base member with detents, a shaft protruding from the base member, a mounting block with shoulders engaging with detents, a spring forcing the base member against the mounting block and a retainer fitted on the end of the shaft extending through the mounting block and the spring. To rotate the ball joint within any of four 90 degree positions a pulling force is exerted on the base member to urge it away from the mounting block. When the ball joint is rotated, the shoulders will automatically snap in the detents after 90 degrees of rotation.

Such mounting equipment enables display screens or other devices to be rotated between horizontal and vertical orientations. However, its construction is complex due to the presence of the ball joint on which the screen is mounted, and the snap connection for mounting the holder on the support arm. The snap connection includes a multi-component release mechanism, which makes the mounting equipment more complex and difficult to assembly and operate.

It is an object of the present invention to provide a rotatable holder for a mobile phone or other electronic device provided with a screen, which is adapted to enable an easy switch from a vertical position into a horizontal position and vice versa.

According to the invention there is provided a holder for a mobile phone or other electronic device with a screen, which is characterized in that the mechanism connecting the holding unit with the connector is a rotation-and-snap mechanism, which is provided with a turning plate having a guiding groove, and being immovably fixed to a base of the holding unit, and a round protrusion on a surface of a base of the connector, which is adapted to engage with the guiding groove. The turning plate is further provided with a protrusion having a slot, within which a locking pin driven by a spring is movably mounted, while the base of the connector is provided with at least one locking hole, which is adapted to interlock with the locking pin.

The base of the connector is preferably provided with two locking holes, which are adapted to limit the rotational motion of the rotation-and-snap mechanism to the angle of 90s.

Advantageously, the turning plate of the holder, according to the invention, is further provided with hooks, perpendicular to the surface of the turning plate, while the base of the connector - with curved guiding gaps, which are concentric in relation to the axis of the rotation-and-snap mechanism and adapted to interlock with the hooks.

Performance tests proved that the holder for a mobile phone or other electronic device with a screen according to the invention enables quick, easy and reliable switching the axis of the screen from a vertical position into horizontal position and vice versa. The holder can also be characterized by a simple design, which does not use expensive ball-and-socket joints, present in the solutions known in the state of the art, which require additional handling while being installed and, moreover, are installed permanently.

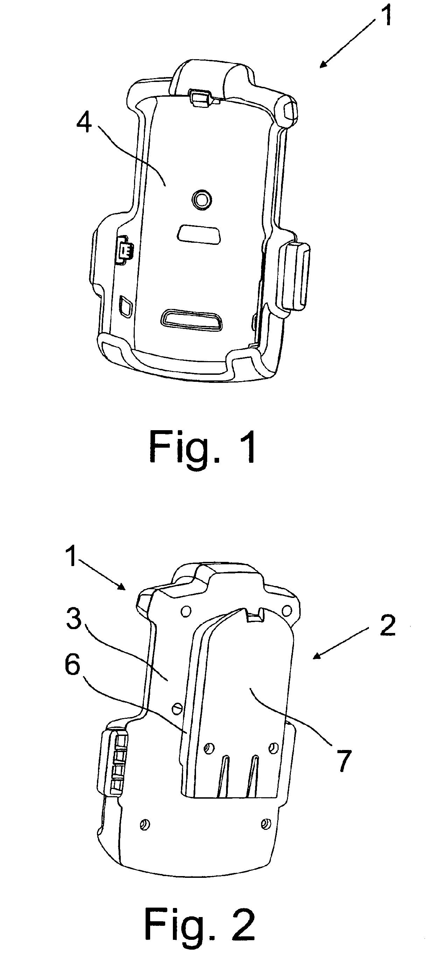

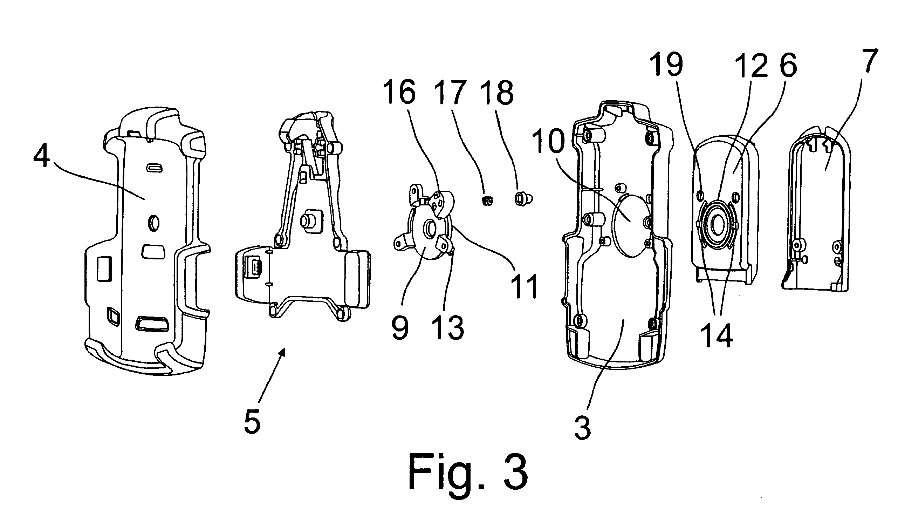

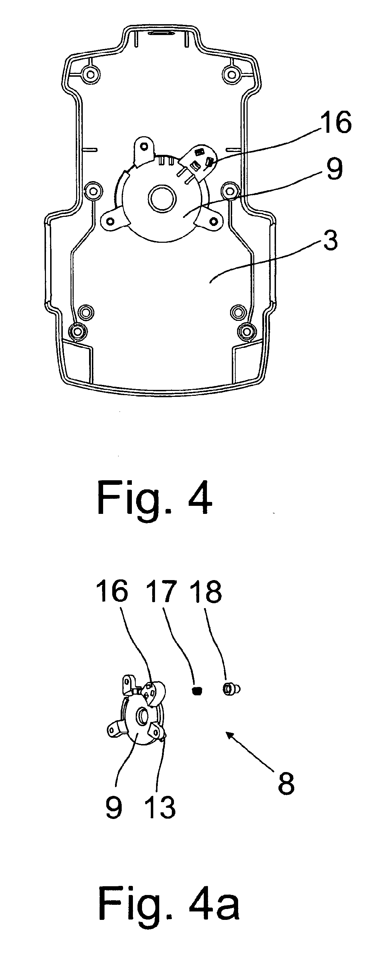

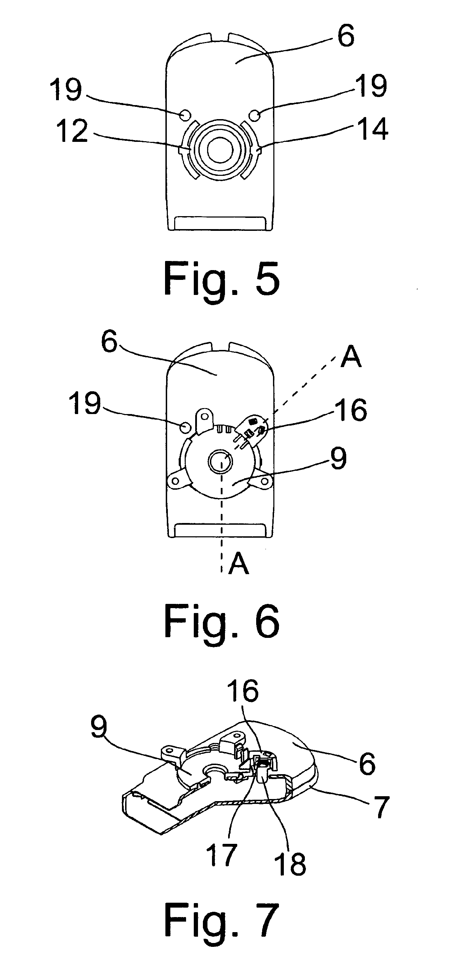

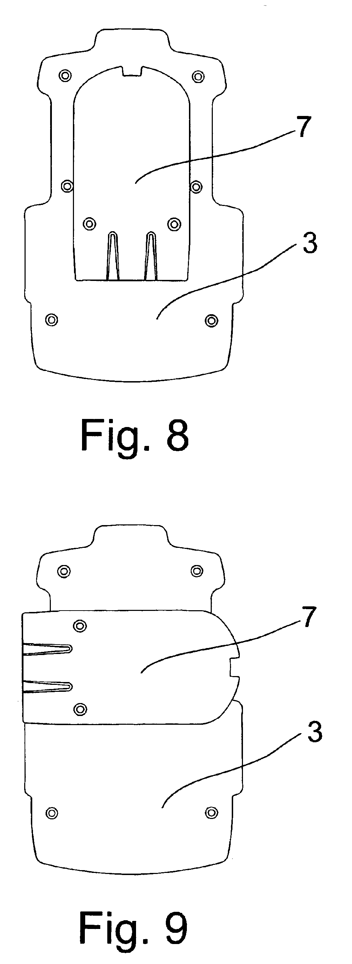

A rotatable holder for a mobile phone or other electronic device with a screen, according to the invention will now be presented with reference to the accompanying drawings, in which: **Fig. 1** is a perspective front view of the holder; **Fig. 2** is a perspective rear view of the holder with a hanger; **Fig. 3** is a perspective exploded view of the holder; **Fig. 4** is an inside view of the holder with a turning plate of a rotation-and-snap mechanism resting in the holder; **Fig. 4a** **-** is a perspective front view of the turning plate of the rotation-and-snap mechanism; **Fig. 5** is a view of a base of a connector, which is adapted to connect the holder and the hanger, as seen from the perspective of interlocking surfaces; **Fig. 6** is a view of the base of the connector with the turning plate resting on it; **Fig. 7** is a perspective view of the cross-section of the turning plate mounted in the base of the connector taken along the line A-A of Fig. 6; **Fig. 8** is the holder with the hanger in a vertical position (before rotation); and **Fig. 9** is the holder with the hanger in a horizontal position (after rotation).

A rotatable holder for a mobile phone or other electronic device with a screen, especially for a mechanical vehicle, as depicted in Figs. 1-3, consists of the following components: a holding unit **1,** a connector **2,** and a rotation-and-snap mechanism, which is adapted to connect the holding unit 1 with the connector **2.**

The holding unit **1** consists of a base **3,** a cover **4** and a locking mechanism **5,** located between the base **3** and the cover **4.** The connector **2** consists of a connector base **6,** a connector cover **7** and a plug, not shown in the drawings, located between the connector base **6** and the connector cover **7** and adapted to engage with a slot in a hanger, not shown in the drawings, which is permanently fixed within a vehicle to a vehicle body.

The rotation-and-snap mechanism, used to rotate the holding unit **1** from a vertical into horizontal position and vice versa, and to lock it in a set position, consists of a turning plate **8** and a set of guides and holes in the connector base **6,** which are adapted to engage with the turning plate **8** (Fig. 3 to Fig. 7). The turning plate **8,** which is a part of the base **3,** and in an embodiment shown in the drawings, has a form of a flat round plate **9,** which rests in a hole **10** in the base **3** and is immovably fixed to the base **3** of the holding unit **1.** On the side facing the connector base **6** the round plate **9** is provided with a groove **11,** which is a guide for a round protrusion **12** on the connector base **6** touching the surface of the round plate **9.** Additionally, the round plate **9** is provided with hooks **13** protruding perpendicularly from its surface, which are adapted to engage with curved guiding gaps **14** in the connector base **6.** Along an axis perpendicular to an axis linking the hooks **13** there is a protrusion **16** with a slot to accommodate a spring **17** and a locking pin **18** driven by the spring **17.**

The locking pin **18,** placed on the spring **17,** is adapted to interlock with locking holes **19** in the connector base **6** and used to lock the holder against the connector in a set position, vertical or horizontal.

The rotation-and-snap mechanism linking the holding unit **1** with the connector **2,** operates as follows: when a mobile phone or other electronic device is inserted into the holding unit **1** is in a vertical position, it is possible to rotate it easily to a horizontal position without the necessity to take the device out from the holder. In order to do this, a slight force should be applied to rotate the holder with the phone against the connector placed in the hanger (mounted to the body of the mechanical vehicle). The necessary force exerted on the holding unit **1** results in that the locking pin **18** overcomes a small resistance of the spring **17** and, as a consequence, a spherical surface of the locking pin **18** presses the edge of the locking hole **19** and the locking pin is pushed out from the hole. A further rotational motion of the holding unit **1,** with an electronic device in it around the axis of the turning plate **8** is guided by the protrusion **12** in the guiding groove **11.** During this motion the hooks **13** are guided in the curved guiding gap **14.** The holder with a phone is rotated by 90 degrees from a vertical position into a horizontal position. In the final phase of this rotation the locking pin **18,** which remains under the pressure of the spring **17,** enters the second locking hole **19** and locks the holder in the set horizontal position. In order to return the holder to the vertical position it is necessary to rotate it again in the opposite direction by applying a force to overcome the resistance of the spring **17.**

Thanks to this design of the holder with the connector a rotation of the holder is possible without removing the phone or the electronic device resting in the holder.

The invention is not limited to the embodiments presented above, but also includes any modifications and changes thereof such that these modifications and changes are consistent with the idea of the invention and are within the scope of the claims.

## Claims

1. A rotatable holder for a mobile phone or other electronic device with a screen, which consists of a holding unit (**1**) locking the mobile phone in the holder, a connector (**2**), which is adapted to connect the holding unit (**1**) with a hanger mounted within a vehicle to a vehicle body, and a mechanism (**5**), by means of which the holding unit (**1**) is rotatably connected with the connector (**2**) and being adapted to enable a rotation of the holding unit (**1**) with the mobile phone or other electronic device inserted into it from a vertical into a horizontal position and vice versa, as well as to enable locking the holding unit (**1**) in a set position **characterized in that** the_mechanism (**5**) connecting the holding unit (**1**) with the connector (**2**) is a rotation-and-snap mechanism, which is provided with a turning plate (**8**) having a guiding groove (**11**) and being immovably fixed to a base (**3**) of the holding unit (**1**), and a round protrusion (**12**) on a surface of a base (**6**) of the connector (**2**), which is adapted to engage with the guiding groove (**11**), and the turning plate (**8**) is further provided with a protrusion (**16**) having a slot, within which a locking pin (**18**) driven by a spring (**17**) is movably mounted, while the base (**6**) of the connector (**2**) is provided with at least one locking hole (**19**), which is adapted to interlock with the locking pin (**18**).

2. The holder according to Claim 1, **characterized in that** the base (**6**) of the connector (**2**) is provided with two locking holes (**19**), which are adapted to limit the rotational motion of the rotation-and-snap mechanism to the angle of 90s.

3. The holder according to Claim 1, **characterized in that** the turning plate (**8**) is further provided with hooks (**13**), perpendicular to the surface of the turning plate (**8**), while the base (**6**) of the connector (**2**) is provided with curved guiding gaps (**14**), which are concentric in relation to the axis of the rotation-and-snap mechanism and adapted to interlock with the hooks **(13)**.

## Patentansprüche

1. Drehhalterung für ein Mobiltelefon bzw. ein anderes Elektronikgerät mit Bildschirm, bestehend aus der eigentlichen Halterung (**1**) zur Verriegelung des Telefons in der Halterung, des Verbindungsstücks (**2**), das zur Verbindung der eigentlichen Halterung (**1**) mit dem am Innenbereich der Karosserie befestigten Hängeelement geeignet ist, dem Mechanismus (**5**) zur Drehverbindung der eigentlichen Halterung (**1**) mit dem Verbindungsstück (**2**), der die Drehbewegung der eigentlichen Halterung (**1**) mit dem Mobiltelefon oder einem anderen Elektronikgerät von der vertikalen in die horizontale Stellung und umgekehrt und eine Verriegelung der eigentlichen Halterung (**1**) in der jeweiligen Lage ermöglicht, **gekennzeichnet dadurch, dass** der Mechanismus (**5**) zur Verbindung der eigentlichen Halterung (**1**) mit dem Verbindungsstück (**2**) ein Dreh- und Rastmechanismus ist, mit einer Drehvorrichtung (**8**) mit Führungsrille (**11**) ausgerüstet ist; diese Drehvorrichtung ist fest in der Grundplatte (**3**) der eigentlichen Halterung (**1**) verankert; auf der Oberfläche der Grundplatte (**6**) des Verbindungsstücks (**2**) befindet sich ein runder Vorsprung (**12**) für die Führungsrille (**11**) und die Drehvorrichtung (**8**) verfügt über einen Vorsprung (**16**) mit Schlitz, in welchem der mit einer Feder (**17**) angetriebene Verriegelungsstift (**18**) verschiebbar gelagert ist und die Grundplatte (**6**) des Verbindungsstücks (**2**) über mindestens ein Verriegelungsloch (**19**) verfügt, das den Verriegelungsstift (**18**) verriegeln kann.

2. Halterung nach Anspruch 1, **gekennzeichnet dadurch, dass** die Grundplatte (**6**) des Verbindungsstücks (**2**) über zwei Verriegelungslöcher (**19**) verfügt, welche die Drehbewegung des Dreh- und Rastmechanismus mit 90° begrenzen können.

3. Halterung nach Anspruch 2, **gekennzeichnet dadurch, dass** ihre Drehvorrichtung (**8**) mit Haken (**13**) verfügt, welche quer zur Oberfläche der Drehvorrichtung (**8**) angeordnet sind und die Grundplatte (**6**) des Verbindungsstücks (**2**) über bogenförmige Führungsschlitze (**14**) verfügt, die zentrisch zum Dreh- und Rastmechanismus angeordnet sind und die Haken (**13**) verriegeln können.

## Revendications

1. Support tourant pour le téléphone portable ou un autre appareil électronique avec un écran, est composé d'un support basilaire (1) bloquant le téléphone dans le support, aussi d'un raccord (2) adapté à joindre le support basilaire (1) avec un crochet fixé à l'intérieur d'une carrosserie du véhicule, ainsi que le mécansme (5) à l'aide duquel le support basilaire (1) est joint d'une manière tournante à l'accord (2) et adapté à faire tourner le support basilaire (1) avec un téléphone installé dedans, ou un outre appareil électronique, de la position verticale vers la position horisontale et vice versa, ainsi que faire bloquer le support basilaire (1) dans la position fixée, **caractérisé par le fait que** le mécanisme (5) qui joint le support basilaire (1) à l'accord (2) est un mécanisme de loquet-rotatif qui est équipé d'une plaque tournante (8) ayant une rainure de guidage (11) et fixée dans une base (3) du support basilaire (1), ainsi qu'une saillie ronde (12) sur la surface de la base (6) de l'accord (2) qui est adapté à s'accrocher à la rainure de guidage (11), alors que la plaque tournante (8) est équipée également d'une saillie (16) ayant une rainure dans laquelle se trouve une goupille de verrouillage (18) qui est commandée par un ressort (17), par contre la base (6) de l'accord (2) possède au moins un trou de blocage (19) qui est adapté à bloquer la goupille de verrouillage (18).

2. Le support, selon la revendication 1, **caractérisé par le fait que** la base (6) de l'accord (2) est équipée de deux troux de blocage (19) qui sont adaptés à limiter un mouvement tournant du mécanisme de loquet-rotatif à l'angle 90°.

3. Le supprot, selon la revendication 2, **caractérisé par le fait que** la plaque tournante (8) est équipée également des crochets (13) en position verticale par rapport à la surface de la plaque tournante (8) et la base (6) de l'accord (2) est équipée des rainures guidant (14) qui sont concentriques par rapport à l'axe du loquet-rotatif et adaptées à bloquer des crochets (13).
